# EUROPEAN PATENT SPECIFICATION

(11) **EP 1 012 454 B1**
(45) Date of publication and mention of the grant of the patent: **14.01.2004**
(21) Application number: 97922226.2
(22) Date of filing: 21.03.1997
(51) Int. Cl.: F01N 3/28

(54) **IMPROVEMENTS IN CATALYTIC REACTORS**
KATALYTISCHER REAKTOR
AMELIORATIONS APPORTEES A DES REACTEURS CATALYTIQUES

(43) Date of publication of application: 28.06.2000
(73) Proprietor: Kemira Metalkat Oy, 41331 Vihtavuori (FI)
(72) Inventor: Nilsson, Sven Melker, 430 50 Kallered (SE)
(74) Representative: Kupiainen, Juhani Kalervo
(86) International application number: PCT/SE1997/000480
(87) International publication number: WO 1998/042964

(56) References cited:
- EP-A- 0 212 243
- WO-A-90/04087
- WO-A-96/34188
- DE-A- 2 312 794
- JP-A- 2 233 820
- PATENT ABSTRACTS OF JAPAN, Vol. 97, No. 2; & JP,A,08 266 905 (NIPPON STEEL CORP) 15 October 1996.

## Description

The present invention relates to improvements in catalytic reactors of a kind comprising a metal substrate body. Generally, such a substrate body consists of alternate flat and corrugated thin metal strips (thickness = 0.05 - 0.1 mm) which are wound upon themselves about an axis 50 as to form passages extending axially through the substrate body for through-flow and catalytic purification of exhaust gases.

To achieve the desired catalytic purification, a coating (so called washcoat) is applied on the metal strips, said coating usually consisting of an aluminium oxide and noble metals (such as e.g. rhodium, platinum, palladium).

The thus wound substrate body is provided with an enclosing metal mantle. According to prior-art technology, this mantle has a sheet thickness of between 1 and 1.5 mm, i.e. a thickness that is 10 to 30 times I greater than that of the metal strips.

The reason for the considerably greater thickness of the mantle is that it must be possible to fasten the mantle by welding or brazing it to on the hand the substrate body and on the other to a casing (canning) surrounding the mantle.

One problem encountered in a thus structured catalytic reactor is its deficient strength. When hot gases (up to 1000° C) flow through the passages, the thin metal strip walls are rapidly heated, and as a result the substrate body expands axially and radially. The surrounding mantle, on the other hand, is not directly exposed to the gas flow. Since in addition thereto it is much thicker and thus has a larger mass to be heated, it will become hot and expand at a much lower rate. In consequence thereof, a considerable compression force will generate in the space between the outermost, thin layer of the substrate and the mantle, and accordingly the latter is a potential cause of deformation of the outer corrugations in the substrate with consequential destruction of the passages in that layer.

When the substrate body is cooling, the opposite problem arises. The thin passage walls are cooled at a much higher rate than is the considerably thicker mantle, the latter, as already mentioned, having no direct contact with the gas flow. Consequently, the substrate body will contract much quicker than the mantle. If, in this situation, the individual metal strips are joined together, considerable tension will generate between the layers in the radial direction as a result of the differences in the extent of contraction between the substrate body and the mantle.

In substrate bodies wherein the coating is the only bonding agent, the strength of the bond will be exceeded and cracks and gaps form, usually in a couple of layers closest to the mantle. In substrate bodies having a diameter size of about 100 mm, a gap of 1 mm may form.

Patent abstracts of Japan Vol. 97, No. 2; & JP,A 08 266 905 discloses a catalytic reactor according to claim 1, first part, comprising a substrate body including a flat sheet metal foil strip and a corrugated sheet metal foil strip disposed one upon the other and wound-up spirally to form axial flow-through passages through the substrate body, a sheet metal mantle strip encasing an outer circumferential surface of the substrate body and having a thickness of e.g. twice the thickness of the flat or corrugated strip.

WO-A-9634188 describes a catalytic carrier arrangement comprising a catalyst body consisting of a monolith and of a metal casing enclosing a monolith. The interior width of casing exceeds that of the monolith whereby a gap forms between the casing and the monolith.EP 0212243 describes a mounting assembly for an exhaust catalyst. A connection between the exhaust gas catalyst carrier body and a tubular jacket is made by three collar or ring-shaped spacers. The spacers are fastened by means of suitable joint connections on the outer layer of the catalyst carrier body.

JP 02 233820 A describes a mantel having ridges and being inserted in corresponding groves of the catalyst core for reducing ventilation resistance.

Also DE 2312794 A describes a mantel having ridges and being inserted in corresponding groves of the catalyst core.

Considerable tension is generated in substrate bodies of the kind wherein the layers are joined together by brazing. Particularly between the outermost layers of the substrate body and the mantle the tension will be of such a magnitude that the brazed bonds run the risk of disrupting. The strength of the catalytic reactor is seriously affected by these problems.

The difference in expansion between the mantle and the substrate body is the principal reason for the generation of compression or tensile stress. The object of the invention is to provide a catalytic reactor having a mantle which is more adaptable to the motions of the substrate body and thus is able to prevent the substrate body from being exposed to harmful mechanical compression or tensile stress. The features characterising the catalytic reactor according to the invention are defined in claim 1, favourable optional features appear from the dependent claims. The thickness of the mantle should be of the same magnitude as the thickness of the metal strip or exceed that thickness to such an insignificant degree that any compression stress that may be exerted on the metal strip corrugations or any tensile stress exerted on the brazed or welded bonds does not surpass the strength of the structure. As the thickness of the metal strips is in the range mentioned initially, i.e. 0.05 - 0.1 mm, the mantle suitably may have a thickness in the range of 0.1 - 0.5 mm.

A second effect obtained by a mantle having a highly reduced thickness in comparison with prior-art mantles used within the technical field concerned is its considerably reduced mass. One consequence of the reduced size is that the mantle will be heated and cooled much quicker than do prior-art mantles. The temperature differences between the mantle and the substrate body will not be as great and therefore not either the differences in expansion and contraction between the mantle and the outermost layers of the substrate body. Furthermore, this will lead to less compression and tensile stress. The reduced difference in contraction between the outermost layers of the substrate body and the mantle owing to the quicker cooling of the latter reduces or eliminates cracking and reduces the formation of gaps between these parts. The result is a catalytic reactor having considerably improved strength/durability.

As appears from the above, the thin mantle produces two effects. The difference in expansion and contraction is reduced and mantle-induced compression is lessened owing to the improved ductility. Both effects act in the same direction and increase the durability of the catalytic reactor.

The thin mantle in accordance with the invention provides several other valuable advantages as will appear from the following detailed description with reference to the accompanying drawings, wherein

Figs 1 and 2 are cross-sectional views of a substrate body consisting of alternate flat and corrugated flat metal strips which are wound helically upon themselves, and showing the body-enclosing mantle in open and closed positions, respectively, and

Fig. 3 is a view of the catalytic reactor as seen from the side, partly surrounded by a casing, so called canning.

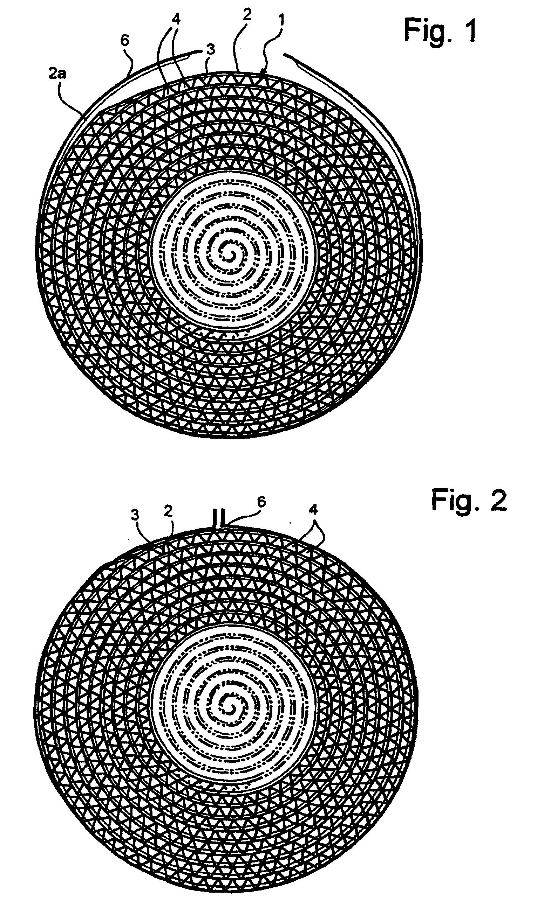

The substrate body 1 shown in Fig. 1 in a cross-sectional view is an example of a prior-art structure wherein alternate flat and corrugated metal strips 2 and 3 are wound helically and thus form through-flow passages 4 through the substrate body 1. If these metal strips 2, 3, prior to being wound, are first oxidized followed by application thereon of a catalytic coating (wash coating), which in itself is advantageous in order to ensure optimum reactor efficiency, the drawback arises in that once the winding of the metal strips 2, 3 is completed it becomes necessary, in order to be able to join the strips together by welding or brazing, to scrape off the coating on the outermost portion 2a of the flat metal strip 2 as well as on the neighbouring portion of the corrugated metal strip 3. In addition, also the oxidized layer must be ground away. Following application of a conventional thicker mantle about the substrate body 1 by compression moulding, the mantle is welded or brazed to its thus exposed strip portions.

The disadvantages of this method are on the one hand that it is comparatively complicated and time-consuming and on the other that the coating material, which is expensive, must be removed.

By the advent of the thin mantle in accordance with the teachings of the present invention the above method may be simplified. After winding of the substrate body 1, on which a coating has been applied, the metal strips 2, 3 are stapled together at the end portion 2a by means of 35 staples, not shown, in order to prevent the metal strips 2, 3 from flexing apart. The substrate body 1 can now be removed from the machine wherein the winding operation has been performed, and a thin mantle 6 be applied about the substrate body.1 to an excellent fit, whereupon the mantle 6 is welded together along a lengthwise joint.

As should be clearly apparent, this method is more convenient, quicker and consequently less expensive than conventional methods. In addition, it becomes possible to exploit other advantages offered by the thinner mantle 6, as will be described in the following.

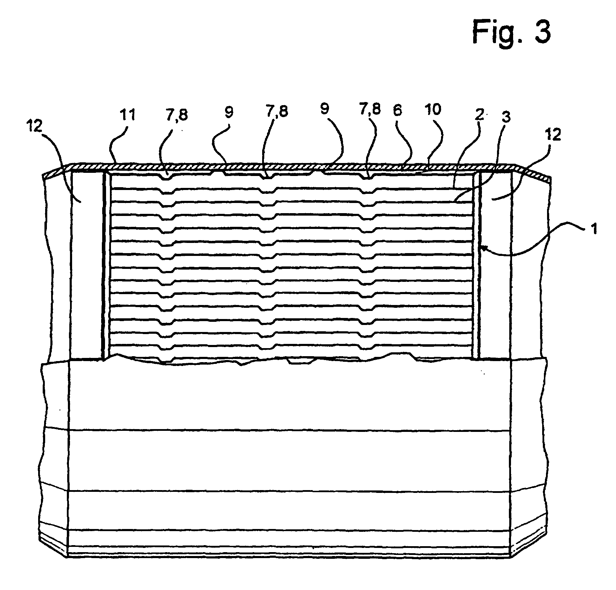

When the substrate body 1 is made from alternate flat and corrugated metal strips 2, 3 in a manner according to which tabs formed in the corrugated strips 3 are used to keep the strips together by engagement of said tabs in channels formed in the flat strips 2 by rolling, the substrate body 1 will have the appearance illustrated in Fig. 3, i.e. it exhibits peripheral impressions or grooves 7 on its circumferential surface. Because in this cage the mantle 6 is thin, sharp-edged ridges 8 are easily formed therein. The ridges fit into the grooves 7 formed in the circumferential surface of the substrate body 1. The bond between the grooves and the ridges fixes the mantle 6 axially relative to the substrate body 1, as required, and this bond thus is obtained without the need for the mantle 6 to be separately fastened, such as e.g. by welding, brazing, riveting, or in any other way.

As also appears from Fig. 3, the mantle 6 likewise exhibits some portions 9 which are produced by rolling and which in a manner known per se form annular protrusions 9 extending peripherally around the mantle 6. In prior-art mantles these annular protrusions have only served to form a gap or clearance 10 between the mantle 6 and an outer casing 11 (canning) in the catalytic reactor in order to reduce heat transfer to the casing 11. As a further characteristic feature of the invention, these annular protrusions 9 may be utilized in the thin mantle 6 to impart resiliency to the mantle 6 for the purpose of minimizing any axial strain that may arise between the substrate body 1 and the mantle 6 as the catalytic reactor is heated and cooled.

In order to minimize any radially directed forces to which the mantle 6 may be exposed and which may be caused by the rigidity of the casing 11, the mantle 6 suitably is equipped at each end face with a collar 12 projecting away from the substrate body 1 in the prolongation of the latter. The collar 12 facilitates the operation of welding the finished catalytic reactor to the casing 11. Prior to mounting, the collar may be given a slightly conical configuration, widening in the direction away from the substrate body 1, a configuration which ensures satisfactory abutment of the collar 12 against the inner face of the casing 11 as the reactor is being fitted into the latter, a feature which further facilitates the welding operation.

The attachment of the catalytic reactor to the casing 11 via a collar 12 at either side provides the additional advantage that vibrations and other movements, as also slight deformations in the casing 11, are reduced or eliminated via said flexible collars 12 and therefore will not be propagated in full to the substrate body. Consequently, this arrangement contributes to increasing the strength/durability of the reactor.

As appears from the description above the thin-walled mantle 6 in accordance with the invention is instrumental in increasing the strength/durability of the catalytic reactor in several ways. A consequence of the flexible enclosure of the substrate body 1 produced by the mantle 6 is that the risk of deformation of the substrate body 1, resulting in the formation of cracks in the catalytic reactor material, is minimized and thus that the serviceable life of the catalytic reactor is increased.

## Claims

1. A catalytic reactor of the kind comprising a substrate body (1) of thin metal sheet formed by alternative flat and corrugated metal strips (2, 3) which are wound spirally to form through-flow passages (4) extending axially through the substrate body (1), and a mantle (6) enclosing the substrate body (1), the flat strip (2) and the corrugated strip (3) having a thickness less than about 0.1 mm; and a sheet metal mantle strip (6) encasing an outer circumferential surface of the substrate body (1) and having a connection therewith, the mantle strip (6) having a thickness of which equals or is only a few times greater than the thickness of the flat and of the corrugated metal strips (2, 3); **characterized in that** one of the mantle strip (6) and the outer circumferential surface (2) having impressions (7) formed therein, and the other of the mantle strip (6) and the outer circumferential surface having projections (8) projecting into respective ones of the impressions (7) to define the connection between the mantle strip (6) and the substrate body (1) and oppose relative axial movements between the substrate body (1) and the mantle strip (6) and **in that** at least one portion (9), produced by rolling, is formed in the mantle (6), said portion (9) forming an annular protrusion projection outwardly from the surface of the mantle (6) for the purpose of reducing any axial forces generating between the substrate body (1) and the mantle (6) as a result of the catalytic reactor being heated or cooled.

2. A catalytic reactor as claimed in claim 1, **characterized in that** mantle (6) have a thickness in the range of 0.1 - 0.5 mm.

3. A catalytic reactor as claimed in claim 1 or 2, **characterized in that** at each one of its end faces the mantle (6) is equipped with a collar (12) projecting away from the substrate body (1) in the prolongation thereof, the mantle being arranged to be attached to a casing (11), so called canning, enclosing said catalytic reactor, by means of said collar (12).

4. A catalytic reactor as claimed in claim 3, **characterized in that** the collar (12) widens slightly conically in a direction outwardly from the substrate body (1).

## Patentansprüche

1. Katalytischer Reaktor von der Art, die einen Substratkörper (1) aus dünnem Metallblech, der durch abwechselnde flache und gewellte Metallstreifen (2, 3) gebildet ist, die spiralförmig umeinander gewickelt sind, um Durchflusskanäle (4) zu bilden, die axial durch den Substratkörper (1) verlaufen, und einen Mantel (6), der den Substratkörper (1) umschließt, aufweist, wobei der flache Streifen (2) und der gewellte Streifen (3) eine Dicke von etwa 0,1 mm haben und wobei ein Metallblechmantelstreifen (6) eine äußere Umfangsfläche des Substratkörpers (1) umfasst und eine Verbindung damit hat, wobei der Mantelstreifen (6) eine Dicke hat, die der Dicke der flachen und der gewellten Metallstreifen (2, 3) gleich ist oder nur einige Male größer ist, **dadurch gekennzeichnet, dass** einer von dem Mantelstreifen und der äußeren Umfangsfläche (2) darin gebildete Vertiefungen (7) hat und der andere von dem Mantelstreifen (6) und der äußeren Umfangsfläche (8) Vorsprünge hat, die in jeweilige der Vertiefungen (7) hineinragen, um die Verbindung zwischen dem Mantelstreifen (6) und dem Substratkörper (1) zu definieren und relativen axialen Bewegungen zwischen dem Substratkörper (1) und dem Mantelstreifen (6) entgegenzuwirken, und dass wenigstens ein Bereich (9), erzeugt durch Walzen, in dem Mantel (6) gebildet ist, wobei der Bereich einen ringförmigen Vorsprung bildet, der nach außen von der Oberfläche des Mantels (6) zu dem Zweck vorsteht, jegliche axiale Krafterzeugung zwischen dem Substratkörper (1) und dem Mantel (6) als Resultat der Erwärmung und der Abkühlung des katlytischen Reaktors zu reduzieren.

2. Katalytischer Reaktor nach Anspruch 1, **dadurch gekennzeichnet, dass** der Mantel eine Dicke im Bereich von 0,1 bis 0,5 mm hat.

3. Katalytischer Reaktor nach Anspruch 1 oder 2, **dadurch gekennzeichnet, dass** jede der Stirnendflächen des Mantels (6) mit einer Manschette (12) versehen ist, die weg von dem Substratkörper (1) in dessen Verlängerung vorsteht, wobei der Mantel dazu angepaßt ist, mit dem Gehäuse (11), der sogenannten Umhüllung, die den katalytischen Reaktor umschließt, durch die Manschette (12) verbunden zu werden.

4. Katalytischer Reaktor nach Anspruch 3, **dadurch gekennzeichnet, dass** die Manschette (12) sich kegelförmig in Richtung von dem Substratkörper (1) nach außen leicht aufweitet.

## Revendications

1. Réacteur catalytique du type comprenant un corps de substrat (1) en tôle métallique mince formé par des bandes métalliques alternativement plates et ondulées (2, 3) enroulées en spirale pour former des passages d'écoulement (4) s'étendant axialement à travers le corps de substrat (1), la bande plate (2) et la bande ondulée (3) ayant une épaisseur inférieure à environ 0,1 mm; et une bande d'enveloppe (6) en tôle métallique entourant une surface périphérique extérieure du corps de substrat (1) et ayant un accouplement avec celle-ci, la bande d'enveloppe (6) ayant une épaisseur égale ou seulement quelques fois supérieure à l'épaisseur des bandes métalliques plate et ondulée (2, 3), **caractérisé en ce que** l'une parmi la bande d'enveloppe (6) et la surface périphérique extérieure (2) comporte des empreintes (7) formées dans celle-ci, l'autre parmi la bande d'enveloppe (6) et la surface périphérique extérieure ayant des saillies (8) faisant saillie dans des empreintes respectives (7) pour former l'accouplement entre la bande d'enveloppe (6) et le corps de substrat (1) et s'opposer à des mouvements axiaux relatifs entre le corps de substrat (1) et la bande d'enveloppe (6) et **en ce qu'**au moins une partie (9), produite par laminage, est formée dans l'enveloppe (6), ladite partie (9) formant une saille annulaire faisant saillie depuis la surface de l'enveloppe (6) dans le but de réduire toute force axiale générée entre le corps de substrat (1) et l'enveloppe (6), par suite du chauffage ou du refroidissement du réacteur.

2. Réacteur catalytique selon la revendication 1, **caractérisé en ce que** l'enveloppe (6) a une épaisseur comprise entre 0,1 et 0,5 mm.

3. Réacteur catalytique selon la revendication 1 ou 2, **caractérisé en ce que**, sur chacune de ses faces d'extrémités, l'enveloppe (6) est munie d'un collet (12) faisant saillie depuis le corps de substrat (1) dans le prolongement de celui-ci, l'enveloppe étant agencée pour être fixée à un boîtier (11), appelé chemise, renfermant ledit réacteur catalytique, à l'aide dudit collet (12).

4. Réacteur catalytique selon, la revendication 3, **caractérisé en ce que** le collet (12) s'élargit d'une manière légèrement conique vers l'extérieur depuis le corps de substrat (1).
